# EUROPÄISCHE PATENTANMELDUNG

(11) **EP 1 120 528 A2**
(43) Veröffentlichungstag der Anmeldung: **01.08.2001**
(21) Anmeldenummer: 00127103.0
(22) Anmeldetag: 11.12.2000
(51) Int. Cl.: E05F 15/10, E06B 9/68

(54) **Antrieb für Verschliesselemente mit drehzahlvariablem Abtrieb**

(30) Priorität: 28.01.2000 DE 10003630
(71) Anmelder: Marantec Antriebs- und Steuerungstechnik GmbH & Co. KG., 33428 Marienfeld (DE)
(72) Erfinder: Hörmann, Michael, 33790 Halle (DE)
(74) Vertreter: Laufhütte, Dieter, Dr.-Ing.

(57) **Zusammenfassung**

Die Erfindung betrifft einen Antrieb für Verschließelemente, wie beispielsweise Tore oder Rolladen, mit drehzahlvariablem Abtrieb und einer Einrichtung zum Erfassen der aktuellen Position des Verschließelementes. Erfindungsgemäß ist die Abtriebsdrehzahl torpositionsabhängig und in Abhängigkeit von der jeweiligen mechanischen Schließcharakteristik des Schließelementes steuerbar.

## Beschreibung

Die Erfindung betrifft einen Antrieb für Verschließelemente, wie Tore oder Rolladen, mit drehzahlvariablem Abtrieb nach dem Oberbegriff des Anspruchs 1.

Zum Antrieb von Türen und Toren ist es bereits bekannt, geschwindigkeitsvariable Antriebe zur Bewegung der Türe und Tore einzusetzen. So sind beispielsweise Garagentorantriebe bekannt, bei denen während der Start- und Stopphase langsamere Öffnungs- bzw. Schließgeschwindigkeiten gefahren werden. Hierdurch wird ein sogenannter Sanftlauf beim Öffnen und Schließen des Garagentors erzielt. Es wird also sichergestellt, daß das Garagentor aus der Ruheposition zunächst langsam auf die endgültige Bewegungsgeschwindigkeit beschleunigt wird und vor dem Abstoppen mit entsprechender Verzögerung der Geschwindigkeit abgebremst wird. Hierdurch wird ein abruptes Zuschlagen des Garagentores, das zum Verschleiß des Tores und zur Lärmbelästigung führen kann, verhindert.

Anderseits sind im Industrietorbereich bereits frequenzumrichtergesteuerte Antriebe im Einsatz, die durch eine geeignete Frequenzvorgabe die Tore in Öffnungsrichtung im Schnellauf betreiben, während das Verfahren in Schließrichtung mit langsamer Geschwindigkeit erfolgt.

Anderseits ergibt sich eine nicht konstante Öffnungs- bzw. Schließbewegung eines Verschlußelementes - wie beispielsweise bei einem Tor, einer Tür oder einem Rollladen - auch durch die konstruktionsbedingte mechanische Eigenschaft des Schließmechanismus selbst. Das Antriebsmoment der Antriebe wird in sehr unterschiedlicher Art und Weise auf die Verschließelemente, d.h. die Türen, Tore bzw. Rolladen, etc. übertragen. So werden Industrietore häufig durch Wellenantriebe bewegt, die direkt die aufwickelnde Welle beaufschlagen. Auch bei Rolltoren, bei denen das Tor spiralförmig auf eine Wickelwelle aufgewickelt wird, wird diese Wikkelwelle unmittelbar vom Antrieb betätigt. Bei sogenannten Sektionaltoren wird üblicherweise eine Torsionsfederwelle mit Seiltrommeln angetrieben. Die Seile werden auf die Trommeln gewickelt. Durch Drehen der Trommeln wird das an den Seilen hängende Tor verfahren.

Beim Bewegen der vorgenannten Schließelemente ergeben sich aufgrund der unterschiedlichen mechanischen Aufwickelprinzipien der Verschließelemente unterschiedliche Torblattgeschwindigkeiten, wenn man hier von einer konstanten Abtriebsdrehzahl des Antriebs ausgeht. Beim Rolltor entstehen diese unterschiedlichen Geschwindigkeiten durch den spiralförmigen Wickel. Bei konstanter Drehzahl der Wickelwelle wird sich das Rolltor zunächst aus dem aufgewickelten Zustand mit einer höheren Geschwindigkeit schließen als kurz vor dem vollständig abgewickelten Zustand, da der Durchmesser des spiralförmigen Wickels während des Abwikkelns des Rolltores kleiner wird und dadurch die Umfangsgeschwindigkeit, mit der das Rolltor abgewickelt wird, bald abnimmt. Umgekehrt wird beim Aufwickeln des Rolltores dieses bei einem noch kleineren Wickeldurchmesser langsamer bewegt als kurz vor Erreichen des maximalen Wickeldurchmessers.

Beim Sektionaltor ergeben sich Geschwindigkeitsdifferenzen beim Öffnen und Schließen dadurch, daß die Seiltrommeln aus Gründen der Anpassung von Torgewicht und Federausgleich nicht immer zylindrisch, sondern auch konisch oder auch in Kombination zylindrisch und konisch ausgebildet sein können. Auch hierdurch entstehen bei konstanter Abtriebsdrehzahl des Antriebs variable Torblattgeschwindigkeiten.

Während die eingangs beschriebenen Geschwindigkeitsänderungen beim Öffnen und Schließen von Verschließelementen erwünscht sind und durch einen geschwindigkeitsvariablen Antrieb der Verschließelemente gezielt herbeigeführt werden, sind die Geschwindigkeitsänderungen beim Öffnen und Schließen von Verschießelementen aufgrund der konstruktionsbedingten Schließcharakteristiken nicht erwünscht.

Man hat erkannt, daß es aus Gründen der Sicherheit erstrebenswert ist - abgesehen von den Start- und Stopphasen - definierte und gleichbleibende Torblattgeschwindigkeiten zu fahren.

Hieraus ergibt sich die Aufgabe, einen gattungsgemäßen Antrieb derart weiterzubilden, daß Verschließelemente unabhängig von ihrer Bauart mit definierten gleichförmigen Öffnungs- und Schließgeschwindigkeiten verfahren werden können.

Erfindungsgemäß wird diese Aufgabe ausgehend von einem gattungsgemäßen Antrieb für Verschließelemente mit drehzahlvariablem Antrieb durch die Kombination mit den kennzeichnenden Merkmalen des Anspruchs 1 gelöst.

Demgemäß wird ein Antrieb für Verschließelemente, wie Tore oder Rolladen mit drehzahlvariablem Abtrieb und einer Einrichtung zum Erfassen der aktuellen Position des Verschließelementes derart ausgestaltet, daß die Abtriebsdrehzahl des Antriebes in Abhängigkeit von der Position des Verschließelementes und in Abhängigkeit von der jeweiligen mechanischen Schließcharakteristik des Verschließelementes steuerbar ist. Hierdurch kann unter Berücksichtigung unterschiedlichster Tor-, Tür, oder Rolladentypen, eine gleichmäßige Öffnungs- und Schließgeschwindigkeit sichergestellt werden. Über die Steuerung kann es selbstverständlich auch vorgesehen sein, während der Start- und Stopphase langsamere Geschwindigkeiten zu fahren. Wesentlich ist es aber, daß während des größten Teils des Verfahrweges eine konstante Verfahrgeschwindigkeit einstellbar ist.

Besonders vorteilhafte Ausgestaltungen der Erfindung ergeben sich aus den sich an den Hauptanspruch anschließenden Unteransprüchen.

Demnach kann die Steuerung des Antriebs mit einer inkrementalen oder auch absoluten Wegerfassungseinrichtung zum Erfassen und Weiterleitungen der Position des Verschließelementes verbunden sein.

Die Steuerung kann zumindest einen Speicher aufweisen, in dem die Werte der mechanischen Schließcharakteristik zumindest eines Verschließelementes ablegbar sind. Die Steuerung kann dann in Abhängigkeit von der Position des Verschließelementes und dem aktuell ausgelesenen Tabellenwert der Schließcharakteristik die Stellgröße für die Abtriebsdrehzahl des Getriebemotors bestimmen. Bei vorgesehenen mehreren Speichern können in dem Antrieb unterschiedliche Schließcharakteristiken für verschiedene Verschließelemente abgelegt werden. Somit läßt sich in besonders vorteilhafter Weise der Antrieb für unterschiedliche Verschließelemente verwenden. Es ist jeweils nur vor Inbetriebnahme des mit dem Antrieb verbundenen Verschließelementes durch Programmierung der Speicher mit dem die Charakteristik des angeschlossenen Verschließelementes enthaltenden Werten freizuschalten.

Alternativ zu der vorgenannten Ausgestaltung kann der Antrieb zur Aufnahme der Schließcharakteristik neben einem Betriebsmodus einen Lernmodus aufweisen, in welchem er in Abhängigkeit von der Position des Verschließelementes die mechanische Schließcharakteristik durch die Ermittlung des Drehmomentenverlaufs über den Verfahrweg des Schließelementes aufnimmt. Diese Charakteristik kann dann ebenfalls in einem Speicher abgelegt werden, der im Betriebsmodus die jeweiligen Schließcharakteristikwerte der jeweilig ermittelten Position des Verschließelementes zuordnet. So kann beispielsweise bei einem Rolltor, die Torcharakteristik, die sich durch das spiralförmige Aufwickeln ergibt, und beim Sektionaltor der geänderte Drehmomentbedarf in Abhängigkeit vom konisch-zylindrischen Seiltrommelverlauf ermittelt und in einem Speicher abgelegt werden, so daß er im Betriebsmodus der jeweiligen Tore verwendet werden kann.

Vorteilhaft ist die Verwendung des vorbeschriebenen Antriebs als Rolltorantrieb oder als Sektionaltorantrieb.

## Patentansprüche

1. Antrieb für Verschließelemente, wie Tore oder Rolladen, mit drehzahlvariablem Abtrieb und einer Einrichtung zum Erfassen der aktuellen Position des Verschließelementes,
dadurch gekennzeichnet,
daß die Abtriebsdrehzahl positionsabhängig und in Abhängigheit von der jeweiligen mechanischen Schließcharakteristik des Verschließelementes steuerbar ist.

2. Antrieb nach Anspruch 1, dadurch gekennzeichnet, daß die Steuerung des Antriebs mit einer inkrementalen oder absoluten Wegerfassungseinrichtung zur Erfassung und Weiterleitung der Position des Verschließelementes verbunden ist.

3. Antrieb nach Anspruch 1 oder Anspruch 2, dadurch gekennzeichnet, daß die Steuerung zumindest einen Speicher aufweist, in dem die Werte der mechanischen Schließcharakteristik zumindest eines Verschließelementes ablegbar sind.

4. Antrieb nach Anspruch 1 oder Anspruch 2, dadurch gekennzeichnet, daß er neben dem Betriebsmodus einen Lernmodus aufweist, in welchem er in Abhängigkeit von der Position des Verschließelementes die mechanische Schließcharakteristik durch die Ermittlung des Drehmomentverlaufs über den Verfahrweg des Schließelementes aufnimmt.

5. Verwendung eines Antriebs nach einem der Ansprüche 1 bis 4 als Rolltorantrieb.

6. Verwendung eines Antriebs nach einem der Ansprüche 1 bis 4 als Sektionaltorantrieb.
